# EUROPÄISCHE PATENTSCHRIFT

(11) **EP 0 859 668 B1**
(45) Veröffentlichungstag und Bekanntmachung des Hinweises auf die Patenterteilung: **28.04.2004**
(21) Anmeldenummer: 96933380.6
(22) Anmeldetag: 25.09.1996
(51) Int. Cl.: B05D 3/10, C08J 7/00, C08L 23/02, C08L 91/00

(54) **POLYOLEFINTEILE UND FOLIEN MIT PERMANENT VERBESSERTEN OBERFLÄCHENEIGENSCHAFTEN**
POLYOLEFINE PARTS AND FOILS WITH PERMANENTLY IMPROVED SURFACE PROPERTIES
PIECES ET FILMS EN POLYOLEFINE AUX PROPRIETES DE SURFACE AMELIOREES DE FACON PERMANENTE

(30) Priorität: 04.10.1995 DE 19536961
(43) Veröffentlichungstag der Anmeldung: 26.08.1998
(73) Patentinhaber: Cognis Deutschland GmbH & Co. KG, 40589 Düsseldorf (DE)
(72) Erfinder: BIRNBRICH, Paul, D-42719 Solingen (DE); DRIESSEN, Ulrike, D-47906 Kempen (DE); GORZINSKI, Manfred, D-40227 Düsseldorf (DE); FISCHER, Herbert, D-40229 Düsseldorf (DE); SCHÄFER, Martin, D-47807 Krefeld (DE); KLAMANN, Jörg-Dieter, D-27574 Bremerhaven (DE)
(86) Internationale Anmeldenummer: PCT/EP1996/004179
(87) Internationale Veröffentlichungsnummer: WO 1997/012694

(56) Entgegenhaltungen:
- EP-A- 0 338 393
- BE-A- 898 893
- GB-A- 1 059 973
- GB-A- 1 183 763
- US-A- 3 314 813
- PATENT ABSTRACTS OF JAPAN vol. 012, no. 398 (C-538), 21.Oktober 1988 & JP,A,63 141675 (SHOWA DENKO KK), 14.Juni 1988,

## Beschreibung

Formgestaltete Werkstücke beliebiger Raumform, einschließlich Fasern und Fäden, sowie Folien auf Polyolefinbasis - insbesondere auf Basis von Polyethylen und Polypropylen - finden heute in breitestem Umfang praktische Verwendung. Ein wichtiger Problembereich liegt hier in der Verbesserung der Oberflächeneigenschaften dieser aus der Struktur her unpolaren Kohlenwasserstoffkomponenten. So ist die mangelnde Haftfestigkeit gegenüber Beschichtungen, Verklebungen, dem Auftrag von Druckfarben und dergleichen ein zentrales Problem, zu dessen Lösung seit Jahrzehnten zahlreiche Vorschläge gemacht worden sind.

Eine zusammenfassende Darstellung der unterschiedlichen Ansätze zur hier betroffenen Problemlösung findet sich beispielsweise in der EP 0 311 723, auf deren Angaben hier der Einfachheit halber verwiesen wird.

Der Begriff der Verbesserung der Haftfestigkeit an festen Polyolefinoberflächen erfaßt dabei in Wirklichkeit einen sehr breiten Bereich technischer Anforderungen stark unterschiedlicher Qualifikation. Sofort verständlich wird das am folgenden Vergleich: Die Verbesserung der Haftfestigkeitswerte einer Druckfarbe auf Polyolefinfolien kann nicht verglichen werden mit der Verbesserung der Haftfestigkeit eines starren Polyolefinformteils gegenüber Verklebungen mit festen Formstücken aus Metall oder anderen Kunststoffen unter Ausschluß eines Adhäsionsbruches bei mechanischer Kraftbeanspruchung der Verklebungsstelle. Von wichtiger praktischer Bedeutung ist darüber hinaus die Zeitabhängigkeit der einstellbaren Haftfestigkeit, wobei hier der Begriff der Zeitabhängigkeit wiederum zwei unterschiedliche Parameter anspricht. Der erste betrifft die Zeitspanne zwischen der Fertigstellung des Polyolefin-basierten Formteiles und seiner nachfolgenden Beschichtung oder Verklebung, der zweite Qualitätsparameter betrifft die Aufrechterhaltung der in dem verklebten Werkstück primär eingestellten Haftfestigkeitswerte über den Zeitraum des praktischen Gebrauchs eines solchen verklebten beziehungsweise beschichteten Werkstoffes, der bekanntlich sehr lange Zeitabschnitte - beispielsweise mehrere Jahre - betragen kann. Gewünscht wird von der Praxis für eine Vielzahl von Anwendungszwecken der hier angesprochenen Technologie die Möglichkeit der Ausbildung hochfester Anbindungen durch Beschichtung und/oder Verklebung unter Einsatz üblicher Hilfsstoffe bis hin zur Festigkeit gegenüber dem Adhäsionsbruch, wobei zugleich zeitliche Unabhängigkeit zwischen Herstellung und Ausrüstung des Polyolefin-basierten Formteiles einerseits und seiner Beschichtung und/oder Verklebung bestehen soll, andererseits die eingestellten Festigkeitswerte dann aber auch über praktisch beliebige Zeiträume aufrechterhalten bleiben.

Von dieser Zielvorstellung geht die erfindungsgemäße Lehre aus. Darüberhinaus will die Erfindung die Möglichkeit geben, technische Ansätze zur Lösung der hier geschilderten Problemstellung aus der Vergangenheit nicht notwendigerweise einsetzen zu müssen. So ist es bekannt, daß die Haftfestigkeitswerte von Polyolefin-basierten Materialien dadurch substantiell angehoben werden können, daß zusammen mit dem unpolaren Polyolefin Copolymere hohen Molekulargewichts mit einem Gehalt an haftvermittelnden polaren Gruppen in der Polymerstruktur verarbeitet werden und/oder daß dem unpolaren Polyolefin durch Aufpfropfen polarer Elemente die gewünschte permanente erhöhte Polarität verliehen wird, vergleiche hierzu beispielsweise die Angaben der DE 34 90 656, EP 0 467 178 und JP 222 181.

Auch die Einarbeitung vergleichsweise niedermolekularer und polare Substituenten enthaltender Mischungskomponenten in die Polymermasse auf Polyolefinbasis ist Gegenstand zahlreicher Vorschläge aus dem Stand der Technik. Hierbei handelt es sich überwiegend um Vorschläge zur Verbesserung der Haftfestigkeit von insbesondere Druckfarben auf Polyolefinfolien, d.h. um die Erfüllung einer vergleichsweise mäßigen technischen Anforderung. Aus dem umfangreichen druckschriftlichen Stand der Technik sei lediglich beispielhaft verwiesen auf die nachfolgenden Druckschriften:

DE OS 27 29 886, EP 0 402 100, die US-Patentschriften 3,396,137, 5,286,525 und 5,393,814 sowie die JA 0 54 331. Überwiegend betreffen die hier zitierten Druckschriften die Verbesserung der Haftfestigkeit von Polyolefinfolien gegenüber den Auftrag von Druckfarben. Dabei wird zusätzlich der Einsatz von bekannten Oberflächenbehandlungen, insbesondere der Corona- oder Plasma-Vorbehandlung, vorgeschrieben.

Die DD-PS 50 947 beschäftigt sich in ihrer Einleitung mit solchen Vorschlägen, niedermolekulare und polare Substituenten enthaltende Zusatzstoffe Polyolefin-Formstoffen zuzusetzen. Angegeben ist hier die zuvor bereits erwähnte Tatsache, daß beim Zusatz derartiger niedermolekularer interner Additive die entsprechenden Polyolefin-Formteile nach längerer Einwirkungsdauer mechanischer Belastungen abnehmende Festigkeitswerte und damit Minderungen der mechanischen Eigenschaften aufweisen.

Anlaß für diese unerwünschte Entwicklung des Eigenschaftsbildes entsprechend ausgerüsteter Materialien ist die bekannte Migration niedermolekularer und polare Substituenten enthaltender Komponenten in Abmischung mit dem Polyolefin. Bekanntlich tritt auch bei homogener Einarbeitung solcher niedermolekularer Zusatzstoffe der als "Ausschwitzen" beziehungsweise "Ausblühen" bezeichnete Effekt auf, der im englischen Sprachgebrauch auch als "bloomingout" bezeichnet wird. Bei Lagerung des niedermolekulare Komponenten enthaltenden polymeren Formteiles oder der entsprechenden Folie wandern die niedermolekularen Zusatzstoffe nach außen an die Formteiloberflächen. Letztlich lösen sich auch die Kohlenwasserstoffreste dieser Zusatzstoffe aus ihrer physikalischen Vermischung mit der Polyolefinsubstanz. Der Zusatzstoff liegt dann als flüssiger oder fester Film auf der Polyolefinoberfläche. Das hat verständlicherweise entscheidenden Einfluß auf die zunehmende Minderung der Haftfestigkeitswerte im entsprechenden Verbundmaterial. Für vergleichsweise geringe Beanspruchung - etwa das Bedrucken von Polyolefinfolien - muß hier nicht sofort technische Unbrauchbarkeit das Ergebnis sein, zumal mit diesem Ausblühen beziehungsweise Ausschwitzen andere Eigenschaften der Polyolefinoberfläche - beispielsweise das Gleitverhalten im Sinne des Slip - verbessert werden können. Wie angegeben ist dieses Phänomen der Migration und des Ausblühens beziehungsweise Ausschwitzens für die zeitunabhängige Ausbildung hochfester Verklebungen und/oder Beschichtungen mit Fremdmaterialien jedoch nicht akzeptabel.

Von diesem hier nur kurz referierten Wissen der betroffenen Fachwelt geht die im nachfolgenden geschilderte Lehre der Erfindung aus. Die Erfindung hat sich dabei die Aufgabe gestellt, gerade diesen technischen Effekt der Migration vergleichsweise niedermolekularer Anteile nach ihrer Einmischung in ein hochmolekulares Polymermaterial auf Polyolefinbasis auszunutzen und durch geeignete Modifikation dieses Prozesses das angestrebte Ziel einer permanenten Verbesserung der Haftfestigkeit auf Polyolefinoberflächen gegenüber Verklebungen und Beschichtungen mit heute üblichen Hilfsstoffen, insbesondere entsprechenden Reaktionsharzen beziehungsweise Reaktionslacken, sicherzustellen. Die Erfindung will dabei die Einstellung hochfester Verklebungen ermöglichen, die das Auftreten des unerwünschten Adhäsionsbruches ausschließen und eine Zerstörung der Klebstoffuge nur über den Kohäsionsbruch beziehungsweise über einen kombinierten Kohäsions/-Adhäsionsbruch sicherstellen.

### Gegenstand der Erfindung

Gegenstand der Erfindung ist die Verwendung von Amphiphilen (Verbindungen, die einen oder mehrere Substituenten erhöhter Polarität in den ansonsten olephilen Grundmolekülen auf Kohlenwasserstoffbasis aufweisen) zur permanenten Verbesserung der Haftfettigkeit der Oberflächen von Polyolefin-basierten Formteilen und Folien gegenüber Beschichtungen und Verklebungen, wobei man eine Mischung enthaltend
a) ein oder mehrere Polyolefine und
b) 0,01 bis 10 Gew.-% - bezogen auf die Polyolefine - ein oder mehrerer migrationsfähiger Amphiphile (Additive I), mit einer Untergrenze der Molekulargewichte von etwa 70 bis 100 Dalton und einer Obergrenze der Molekulargewichte um 5000 Dalton,
in Gegenwart von Katalysatoren, die eine reaktive Vernetzung der Additive (I) im Bereich der Kunststoftoberfläche fördern, auf übliche Weise einer formgebenden Verarbeitung unterwirft, mit der zusätzlichen Maßgabe, dass die Additive (I) Dialkanolamide ungesättigter Fettsäuren sind.

Diese zur Migration befähigten vergleichsweise niedermolekularen Additive werden im nachfolgenden auch als "Additiv (I)" bezeichnet. Der Begriff des "Formteils" ist breit zu verstehen und erfaßt sowohl entsprechende starre Elemente - zum Beispiel Platten - wie auch Fasern und/oder Fäden beziehungsweise unter ihrer Mitverwendung ausgebildete Werkstücke.

Durch die erfindungsgemäße Lehre wird erreicht, daß auch ohne zusätzliche Vorbehandlungen der Polyolefinoberfläche permanent haftfeste Verklebungen und/oder Beschichtungen dieser erfindungsgemäß ausgerüsteten Polyolefinoberfläche ausgebildet werden können.

Bevorzugt werden erfindungsgemäße Additive (I), die im nicht-abreagierten Zustand Jodzahlen von wenigstens etwa 10, vorzugsweise von wenigstens etwa 30 bis 40 und insbesondere von wenigstens etwa 45 bis 50 aufweisen. Wie im einzelnen noch gezeigt wird können dabei sowohl monoolefinisch ungesättigte Kohlenwasserstoffreste als auch polyolefinisch ungesättigte Kohlenwasserstoffreste im Rahmen der erfindungsgemäß eingesetzten Additive (I) vorgesehen sein. Auch Kombinationen einer Mehrzahl entsprechender Verbindungen sind wichtige Hilfsstoffe für das erfindungsgemäße Handeln. Die jeweiligen Jodzahlen der zum Einsatz kommenden Additive (I) können dabei Werte oberhalb 80 bis 90 und insbesondere auch Werte oberhalb 100 annehmen. Hoch-ungesättigte Additivkomponenten mit Jodzahlen bis etwa 200 oder auch noch darüber, beispielsweise im Bereich von 120 bis 170, sind Hilfsstoffe im Sinne des erfindungsgemäßen Handelns, die sich einerseits besonders wirkungsvoll im Außenbereich des festen Polyolefin-Formteiles immobilisieren lassen, zum anderen handelt es sich in der Regel bei diesen hoch-ungesättigten Additiven um bei Raumtemperatur oder im Bereich leicht erhöhter Temperaturen bis beispielsweise 40 bis 45°C fließfähige Verbindungen. Der für die Verwirklichung des erfindungsgemäßen Arbeitsprinzips wesentliche Migrationsschritt wird bei Einsatz solcher Komponenten ebenso erleichtert wie die Immobilisierung der zur Wanderung befähigten Zusatzkomponenten in den Außenbereichen des ausgeformten Polyolefinteiles.

In der Raumstruktur ihres Kohlenwasserstoffrestes können diese internen Additive (I) sowohl geradkettig, als auch verzweigt sein und/oder eine cyclische Struktur aufweisen. Das Vorliegen hinreichender olefinischer ungesättigter Elemente ermöglicht auch die permanente Einbindung geradkettiger Additive (I) in die Polyolefinoberfläche beziehungsweise Außenfläche. Durch stark verzweigte und/oder cyclische Strukturen des Kohlenwasserstoffrestes kann eine zusätzliche Behinderung des Migrationseffektes insbesondere im Bereich der obersten Materialschichten des Polyolefins ausgelöst werden, die auch über physikalische Effekte die Immobilisierung der hier betroffenen Additive im Außenflächenbereich des Polyolefin-basierten Formteiles sicherstellt. Einzelheiten hierzu werden nachfolgend noch gegeben.

Dialkanolamide ungesättigter Fettsäuren sind hochwirksame Haftfestigkeitsverbesserer im Sinne der erfindungsgemäßen Lehre. Insbesondere gilt das für die entsprechenden Diethanol-Derivate. Zu dieser Klasse gehören beispielsweise Ölsäurediethanolamid und Linolsäurediethanolamid. Ausdrücklich einbezogen sind in diesem Zusammenhang dem Fachmann bekannte technische Produkte einschließlich der darin üblicherweise auftretenden Nebenkomponenten. Beispiele hierfür sind "Comperlan OD" (technisches Ölsäurediethanolamid) und "Comperlan F" (technisches Linolsäurediethanolamid), beides bekannte Handelsprodukte der Anmelderin.

Die Auswahl und Bestimmung der haftvermittelnden Additive (I) nach Molekülgröße und Beschaffenheit der verschiedenen funktionellen Anteile des Moleküls betrifft einen ersten Bereich der erfindungsgemäßen Lehre. Bestimmt wird hierdurch die Migrations- beziehungsweise Wanderungsfähigkeit des auch homogen in die Polyolefinmasse eingearbeiteten Hilfsstoffes nach einer Ausbildung des jeweiligen Formteiles, beispielsweise durch Extrusionsverfahren. Für die Verwirklichung der erfindungsgemäßen Lehre ist der im nachfolgenden geschilderte weitere Komplex von Bestimmungselementen wichtig. Hier handelt es sich um die Immobiliserung der im Oberflächenbereich des Kunststoffs angereicherten Additive (I) durch chemische - und dabei bevorzugt katalytisch induzierte und/oder unterstützte - Abreaktion reaktiver Molekülbestandteile der Kohlenwasserstoffreste der Additive (I) unter Molekülvergrößerung und/oder um die Fixierung wenigstens eines Anteiles dieser Additive durch eine physikalische Hemmung der weiterführenden Migration. Zunächst sei im einzelnen auf die Variante der reaktiven Immobiliserung des zunächst migrationsfähigen Additivmoleküls eingegangen.

Die Fähigkeit zur Migration in der formgestalteten Polyolefinmasse wird substantiell durch die Molekülgröße des Additivs beeinflußt. Bei ansteigendem individuellen (absoluten) Molekulargewicht tritt - in Abhängigkeit von zusätzlichen physikalischen Parametern - eine zunehmende Behinderung der Migration statt, die bei Erreichen einer hinreichenden Größe des Moleküls zu seiner Immobiliserung am vorgegebenen Ort führt, auch wenn grundsätzlich die Tendenz zum weiterführenden Auswandern erhalten bleibt. Hiervon macht die erfindungsgemäße Lehre Gebrauch. Die haftvermittelnden Additive (I) werden zunächst mit einer Molekülgröße in Abmischung mit dem Polyolefinfeststoff eingesetzt, die die vorbestimmbare Migration in die Außenbereiche des Polymermaterials sicherstellt. In der hier besprochenen Ausführungsform wird jetzt aber eine chemische Abreaktion der wandernden Additive in diesem Oberflächengrenzbereich ausgelöst beziehungsweise durch Mitverwendung geeigneter Hilfsmittel sichergestellt. Hier gilt ja doch das folgende: Luftsauerstoff ist nicht nur an der Außenfläche des Kunststoffes vorhanden, auch die für die erfindungsgemäße Lehre wesentlichen Kunststoffbereiche in unmittelbarer Nähe zur Außenfläche nehmen gewisse Mengen an Luftsauerstoff durch Diffusion auf. In an sich bekannter Weise kann damit ein olefinisch hinreichend ungesättigtes Additivmolekül zur oxidativ ausgelösten Abreaktion unter Molekülvergrößerung gebracht werden. Durch geeignete Abstimmung der hier zu berücksichtigenden Parameter im Sinne des allgemeinen Fachwissens gelingt damit die Verwirklichung der erfindungsgemäßen Zielvorstellung, die zunächst migrationsfähigen Haftvermittlermoleküle in diesem Außenbereich des Kunststofformteiles derart unter Molekülvergrößerung zu immobilisieren, daß hinreichende und vorbestimmbare Anteile funktioneller Gruppen erhöhter Polarität dem von außen erfolgenden Auftrag von Beschichtungsmassen und/oder Klebstoffen zur Verfügung stehen, die zugehörigen Kohlenwasserstoffreste dieser Additivmoleküle aber noch unmittelbar oder mittelbar über weitere Additivmoleküle in inniger Abmischung mit dem Polyolefinmolekül verbleiben. Das so aufgebaute Oligo- beziehungsweise Polymolekül des haftvermittelnden Zusatzstoffes kann damit die ihm zugeordnete Funktion der permanenten Haftverbesserung bei gleichzeitig optimierter Anhebung der Haftverbesserung verwirklichen.

Die hier als ein Beispiel der erfindungsgemäßen Lehre dargestellte Abfolge des Prozesses im Sinne der Erfindung kann im Konkreten in unterschiedlichsten Formen verwirklicht werden. Wiederum beispielhaft seien hier einzelne konkrete technische Verwirklichungen beschrieben:

Die insbesondere in Gegenwart von Sauerstoff zur Abreaktion befähigten internen Haftvermittler werden zusammen mit Katalysatoren in das Polyolefin-basierte Kunststoffmaterial eingearbeitet, die eine reaktive Vernetzung im Kunststoffoberflächenbereich fördern. Hier können also wenigstens anteilsweise olefinisch ungesättigte Additive (I) zusammen mit Katalysatoren, beispielsweise auf Basis von Übergangsmetall-Salzen, zum Einsatz kommen. Die katalytische Aushärtung von olefinisch ungesättigten organischen Komponenten vergleichsweise niederen Molekulargewichts unter Einsatz solcher Übergangsmetall-Salze ist dem Fachmann beispielsweise aus der Technik der Lack- und Anstrichmittel bekannt. Die hier katalytisch aktiven Übergangsmetall-Salze werden in der Fachsprache üblicherweise auch als Sikkative bezeichnet. Geeignete Sikkative sind etwa Salze aus der Gruppe Co, Zr, Fe, Pb, Mn, Ni, Cr, V und/oder Ce. Schon äußerst geringe Konzentrationen solcher Übergangsmetall-Salze, die beispielsweise im untersten ppm-Bereich oder auch deutlich tiefer liegen, haben ausgeprägte katalytische Wirkung zur Beschleunigung der Aushärtung olefinisch ungesättigter Komponenten durch oxidative Abreaktion unter Einfluß von Luftsauerstoff bei gleichzeitiger Molekülvergrößerung. Die erfindungsgemäße Lehre setzt dieses Wissen dem Grundsatz nach ein, gleichzeitig wird damit aber auch dem Fachmann die Optimierung im jeweils gegebenen konkreten Einzelfall ermöglicht, die ihm das angestrebte Ziel der Permanenz und der wertmäßigen Optimierung der Haftverbesserung sicherstellt, ohne grundlegende Änderungen der Wertstoffeigenschaften des Polyolefin-basierten Grundkörpers auszulösen. Hier gelten die folgenden zusätzlichen Erwägungen:

Jüngere Arbeiten der einschlägigen Fachwelt beschäftigen sich mit der Aufgabenstellung, die durch natürliche Abbauprozesse nicht oder nur sehr schwer abzubauenden Polymermaterialien auf Basis von Polyolefinen, insbesondere Polyethylen und/oder Polypropylen, durch Zusatz von ausgewählten Additiven einem erleichterten Abbau unter Umweltbedingungen zugänglich zu machen. Interessant kann das beispielsweise für Agrarfolien sein. Verwiesen wird in diesem Zusammenhang auf die PCT-Veröffentlichung WO 93/12 171. Beschrieben ist hier thermoplastische Polymerverbindungen der auch erfindungsgemäß betroffenen Art dadurch unter den Bedingungen der Kompostierung bei einer relativen Feuchte von wenigstens 80% und einer Temperatur von 60°C innerhalb eines Zeitraumes von 14 Tagen zum versprödeten Material abbaubar zu machen, daß in das hochmolekulare Polymere sogenannte auto-oxidative Komponenten zusammen mit vorbestimmten Mengen ausgewählter Übergangsmetalle eingearbeitet werden. Als auto-oxidative Komponenten eignen sich nach den Angaben dieser Druckschriften insbesondere ungesättigte Fettsäuren und deren Ester, die in Mengen von 0,1 bis 10 Gew.-% - bezogen auf Gesamtgemisch - zugesetzt werden sollen. Als Katalysatoren zur Auslösung der Oxidation werden die Salze ausgewählter Übergangsmetalle nämlich Salze von Kobalt, Mangan, Kupfer, Cer, Vanadium und Eisen in Mengen von 5 bis 500 ppm des Übergangsmetalls gleichzeitig eingesetzt. Zur Stabilisierung der Polyolefin-basierten Masse während ihres Gebrauchszeitraumes wird zusätzlich vorgeschlagen Antioxidantien mit zu verwenden. Die Druckschrift gibt dabei unter Bezugnahme auf einschlägigen Stand der Technik an, daß diese neuesten Untersuchungen gezeigt hätten, daß nur unter Einhaltung der hier wiedergegebenen Übergangsmetallkatalysatoren nach Art und Menge die angestrebte Abbaubarkeit des Polyolefinmaterials sichergestellt werden kann.

Die erfindungsgemäße Lehre differenziert sich von diesem Fachwissen des Standes der Technik wie folgt: Ziel der erfindungsgemäßen Lehre ist nicht die potentielle Abbaubarkeit von Polyolefin-basierten Formteilen und/oder Folien zu schaffen oder zu verändern. Erfindungsgemäß soll vielmehr die Polyolefinstruktur in ihrem Grundgefüge soweit nur möglich unverändert bleiben. Zielvorstellung der Erfindung ist vielmehr die Verbesserung der Haftfestigkeit auf den Oberflächen dieses Polyolefin-basierten Materials, d.h. die Veränderung eines wichtigen Parameters, der in der zuletzt zitierten Druckschrift des Standes der Technik überhaupt nicht angesprochen ist. Der erfindungsgemäßen Lehre liegt dabei die Erkenntnis zugrunde, daß durch Fixierung der zunächst mittels Migration in den Außenbereich des jeweiligen Polyolefin-basierten Formteiles abgewanderten Haftvermittler diese Zielvorstellung erfüllt werden kann.

Werden dabei Arbeitsmittel im Sinne der Offenbarung der PCT WO 93/12 171 im Rahmen der erfindungsgemäßen Lehre mitverwendet, so kann durch Einschränkung der Menge des mitverwendeten Sikkativs auf Basis der hier betroffenen Übergangsmetalle sichergestellt werden, daß ein oxidativer Gesamtabbau des Polyolefins im Sinne der Lehre dieser Druckschrift in erfindungsgemäß ausgestalteten Mehrkomponentengemischen nicht auftritt. Im Beispielsteil wird gezeigt, daß beim Einsatz von Sikkativgehalten deutlich unterhalb 5 ppm die erfindungsgemäß angestrebte Fixierung der in den Außenbereich migrierten Haftvermittler ausgelöst wird. Dabei kann der Sikkativgehalt um mehrere Größenordnungen unter die Untergrenze der hier abgehandelten Druckschrift des Standes der Technik von 5 ppm abgesenkt werden, ohne eine substantielle Einschränkung der angestrebten Haftverbesserung auszulösen. Zusätzlich und unabhängig davon gelten darüberhinaus die folgenden Sachverhalte:

Die für die erfindungsgemäße Lehre zuvor definierten Sikkative auf Übergangsmetallbasis sind breiter definiert als die gezielt eingeschränkte Gruppe von Übergangsmetallen gemäß der Lehre der hier diskutierten Druckschrift. Diese Druckschrift sagt weiterhin aus, daß als auto-oxidative Komponente nur Monocarbonsäuren und deren Abkömmlinge geeignet sind. Für die erfindungsgemäße Lehre sind Additive (I) besonders geeignet, die entweder am Molekül eine Mehrzahl entsprechender funktioneller Gruppen erhöhter Polarität aufweist und/oder ganz andere Struktur beziehungsweise Beschaffenheit haben. Das technische Handeln im Sinne der erfindungsgemäßen Lehre ist insbesondere aber nicht auf die Anwendung von Sikkativen im Sinne der hier sich überlappenden Übergangsmetall-Verbindungen eingeschränkt. Zur Fixierung der migrationsfähigen Haftvermittler von der Art der Additive (I) können Arbeitsbedingungen und insbesondere Initiatoren beziehungsweise Katalysatoren eingesetzt werden, die vollständig frei von Übergangsmetallen beziehungsweise ihren Verbindungen der hier zur Diskussion stehenden Art sind.

Aber auch bei der Mitverwendung von Sikkativen der zuvor zitierten Art auf Basis von Verbindungen der Übergangsmetalle eröffnet - wie dargestellt - die erfindungsgemäße Lehre den Weg zur Sicherstellung der angestrebten verbesserten Haftfestigkeit, ohne gleichzeitig das polymere Grundmaterial in seinen Werkstoffparametern zu gefährden. In einer bevorzugten Ausführungsform werden dabei die Sikkative in Kombination mit solchen Additiven (I) eingesetzt, die ausgewählt sind aus der Klasse der Diethanolamide ungesättigter Fettsäuren. Wie bereits ausgeführt werden die Diethanolamide vorzugsweise als technische Ware eingesetzt. Geeignete Sikkative für den erfindungsgemäßen Einsatz können hier beispielsweise organische Verbindungen und insbesondere entsprechende Carbonsäuresalze der jeweiligen Übergangsmetalle sein. Hierbei können die Carbonsäuren zusätzlich auch noch so ausgewählt sein, daß sie ihrerseits aufgrund ihrer Molekularstruktur zum haftvermittelnden internen Additiv werden. Unter Berücksichtigung der extrem geringen benötigten Mengen an Sikkativ ist das allerdings lediglich eine Variante. Besonders brauchbare Sikkative finden sich hier auch in den Klassen vergleichsweise niederer gesättigter Fettsäuren mit beispielsweise 6 bis 12 C-Atomen im Fettsäuremolekül. Dabei können diese Sikkativ-Fettsäuren insbesondere auch geradkettig ausgebildet sein.

Während in der bisher dargestellten konkreten Ausgestaltung der erfindungsgemäßen Lehre die gewünschtenfalls katalytisch gesteuerte Autoxidation der zur Migration befähigten Additive (I) unter gleichzeitiger Molekülvergrößerung im Bereich der Kunststoffoberfläche der entscheidende Immobiliesierungsschritt ist, erschließt die erfindungsgemäße Lehre jedoch weitere Möglichkeiten zur Verwirklichung des angegebenen Prinzips. So können neben oder anstelle der bisher konkret genannten Sikkative andere Katalysatorsysteme mitverwendet werden, die ihrerseits der Migration in die Außenbereiche des Polyolefin-basierten Kunststoffteiles unterliegen und dort bei Zutritt von Luftsauerstoff und/oder durch Einsatz zusätzlicher Arbeitshilfen die molekülvergrößernde Abreaktion olefinisch ungesättigter interner Additive (I) auslösen beziehungsweise sicherstellen. So kann beispielsweise in an sich bekannter Weise durch Energieeintrag mittels geeignet ausgewählter energiereicher Bestrahlung die molekülvergrößernde Abreaktion ausgelöst werden. Hierfür geeignete Katalysatoren sind im Stand der Technik bekannt. Sie sind nicht an die Mitverwendung von Übergangsmetallen der zuvor beschriebenen Sikkativklasse gebunden. Auf diese Weise kann das erfindungsgemäße Arbeitsergebnis eingestellt werden, ohne metallische Komponenten mitverwenden zu müssen.

In diesem Zusammenhang sei auf eine weitere mögliche Abwandlung der erfindungsgemäßen Lehre eingegangen: Für eine potentielle Abreaktion der Additive (I) im Bereich der Kunststoffoberfläche sind neben den bisher genannten olefinischen Doppelbindungen auch andere Bausteine des Additivmoleküls grundsätzlich geeignet. So ist bekannt, daß verzweigte Kohlenwasserstoffreste zu Bausteinen im Molekül führen können, die sich ebenfalls katalytisch zu einer Abreaktion unter gleichzeitiger Molekülvergrößerung eignen. Insbesondere kommen hier tert.-C-Atome in der Molekülstruktur in Betracht. In der hier angesprochenen Abwandlung der erfindungsgemäßen Lehre wird von dieser dem Fachmann bekannten Gesetzmäßigkeit Gebrauch gemacht. Auch hier wird ein jetzt beispielsweise aliphatisch gesättigtes Additivmolekül zunächst der Migration im ausgeformten Polyolefinmaterial ausgesetzt. Im Außenbereich des Formteiles findet dann die Molekülvergrößerung durch Abreaktion der hier genannten funktionellen Elemente des Additivmoleküles - vorzugsweise wieder unter dem Einfluß entsprechend ausgewählter katalytisch aktiver Zusatzstoffe und/oder zusätzliche Energiezufuhr durch beispielsweise Strahlenbehandlung - statt. Die erfindungsgemäße Lehre unterscheidet sich auch hier aber gleichwohl von der an sich bekannten Beeinflussung der Polyolefinoberfläche beispielsweise im Sinne einer Corona- oder Plasma-Behandlung. Das erfindungsgemäße Arbeitsprinzip stellt die angestrebten hohen Haftfestigkeiten auch schon ohne Einsatz solcher zusätzlicher Vorbehandlungsschritte sicher. Eine Kombination des erfindungsgemäßen Arbeitsprinzips mit vorbekannten Maßnahmen zur Erhöhung der Haftfestigkeit ist aber natürlich nicht ausgeschlossen und fällt in den Rahmen der erfindungsgemäßen Lehre.

In einer wichtigen Ausführungsform der erfindungsgemäßen Lehre werden die migrationsfähigen Haftvermittler vom Typ der Additive (I) zusammen mit einer weiteren Additiv-Komponente eingesetzt, die im nachfolgenden als "Additiv (II)" bezeichnet wird. Bei dieser Stoffklasse handelt es sich um olefinisch ungesättigte Gruppen enthaltende Verbindungen höheren Molekulargewichts und dementsprechend eingeschränkter Beweglichkeit im Polyolefin-basierten Kunststoff. Bevorzugt können hier entsprechende Oligomer- beziehungsweise Polymerkomponenten mit Molekulargewichten bis zu etwa 1 Mio. D sein, wobei die Untergrenze des Molekulargewichts solange frei wählbar ist, als eine hinreichende Migrationshemmung im fertigen Polyolefinformteil vorliegt. Geeignete Untergrenzen für das Molekulargewicht dieser Additive (II) liegen beispielsweise bei Werten von =/> 10.000 D, insbesondere bei entsprechenden Werten =/> 50.000 bis 75.000 D und zweckmäßigerweise bei Werten von wenigstens 100.000 D. Auch hier gilt, daß durch Strukturparameter, beispielsweise eine komplexe Raumstruktur dieses Additivs (II), zusätzlich Einfluß auf die mögliche Beweglichkeit dieses Hilfsstoßes im verfestigten Polyolefinformteil genommen werden kann.

Die Zusatzstoffe dieser Additivklasse (II) werden bevorzugt ebenso wenigstens weitgehend homogen in dem Polyolefin-Polymeren verteilt, wie die anderen bisher geschilderten Zusatzstoffe. In dem nachfolgenden Migrationsschritt bleibt diese Additivkomponente (II). im wesentlichen aber in ihrer räumlichen Verteilung und Zuordnung unverändert. Bei der nachfolgenden Fixierung der Additivkomponente(n) (I) ist jetzt die zusätzliche Möglichkeit der Anbindung der Additivkomponente(n) (I) an die Additivkomponente(n) (II) gegeben. Es leuchtet ein, daß hierdurch die erfindungsgemäß angestrebte Fixierung der haftvermittelnden Additivkomponente(n) (I) positiv beeinflußt werden kann.

Als Additiv (II) eignen sich grundsätzlich Oligomer- beziehungsweise Polymerkomponenten eines hinreichenden Molekulargewichts, sofern sie in ihrer Molekülstruktur reaktive ethylenische Doppelbindungen für eine potentielle Anbindung der Additivkomponente(n) (I) anbieten. Lediglich beispielhaft seien ungesättigte Alkydharze benannt, die bevorzugt eine Öllänge von 20 bis 70% aufweisen. Weitere Beispiele sind Butadienderivate, Isoprenderivate, allylhaltige Polymere ungesättigte Polyester auf Basis polyfunktioneller Carbonsäuren und/oder Poly(meth)acrylate mit Resten ungesättigter Fettalkohole.

Für einen solchen gemeinsamen Einsatz der Additive (I) und (II) können Mengenverhältnisse der jeweiligen Komponenten (Additiv (I) : Additiv (II)) im Bereich von 10 : 1 bis 1 : 3 bevorzugt sein, insbesondere sind hier Mengenverhältnisse innerhalb des Bereichs von 8 : 1 bis 1 : 1, bevorzugt. In den wichtigen Ausführungsformen wird also in der Regel das Additiv (II) in untergeordneter oder höchstens in gleicher Menge vorliegen wie das Additiv (I). Die Stoffgemische aus den hier angegebenen Additiven werden dabei dem Polyolefin-basierten Kunststoff in der Regel in Mengen von 0,01 bis 10 Gew.-% und vorzugsweise in Mengen von 0,1 bis höchstens etwa 5 Gew.-% und insbesondere in Mengen von wenigstens 0,5 bis 1 oder 3 Gew.-% zugesetzt - Gew.-% jeweils bezogen auf Polyolefin-basierten Kunststoff.

Unter Berücksichtigung der zuvor geschilderten Ausführungsform, in der Sikkative als zusätzliche katalytische Hilfe zur Immobilisierung der migrationsfähigen Additive (I) mitverwendet werden, sind Stoffgemische aus den hier betroffenen Additivtypen und dem Sikkativ bevorzugt, die - Gew.-% jetzt bezogen auf das Additiv-Gemisch - die einzelnen Komponenten in den folgenden Mengenverhältnissen aufweisen:

| | |
|---|---|
| Additiv I: | 5 bis 100 Gew.-%, vorzugsweise 25 bis 99 Gew.-% |
| Additiv II: | 0 bis 80 Gew.-%, vorzugsweise 9 bis 50 Gew.-% |
| Sikkativ: | 0 bis 20 Gew.-%, vorzugsweise 0 bis 12 Gew.-% |

Wie aus diesen Zahlenwerten ersichtlich kommt im Regelfall den erfindungsgemäß definierten Additiven (I) die mengenmäßig übergeordnete Bedeutung zu. Die gegebenenfalls als Hilfsstoffe mitverwendeten nicht oder praktisch nicht migrationsfähigen Additive (II) werden bei der Einarbeitung in die Polyolefin-basierte Kunststoffmasse darin möglichst homogen verteilt. Sie liegen dann auch in den für die Immobilisierung der migrationsbefähigten Additivkomponenten (I) wichtigen Bereichen nahe der Oberfläche vor. Aufgrund ihrer olefinisch ungesättigten Elemente sind sie zur Abreaktion mit den Additiven (I) befähigt. Bevorzugt sind hier Jodzahlen für die erfindungsgemäß definierten Additive (II) im Bereich von etwa 50 bis 150, insbesondere im Bereich von etwa 70 bis 130.

Die in den bevorzugten Ausführungsformen mitverwendeten Sikkative und/oder sonstigen Katalysatoren beziehungsweise Initiatoren zur Einbindung und Immobilisierung der Additive (I) können in den vergleichsweise sehr geringen Mengen mitverwendet werden, wie es dem fachmännischen Wissen zur katalytischen Induzierung solcher Reaktionen entspricht. Wie bereits angegeben hat sich gezeigt, daß die Mitverwendung von beispielsweise Sikkativen auf Basis der Übergangsmetalle schon deutlich unterhalb des ppm-Bereichs zur wirkungsvollen Immobilisierung der Additive (I) im dafür vorgesehenen Bereich der obersten Schichten des festen Kunststoffmaterials führt.

Zur Beschaffenheit der im jeweiligen Einzelfall einzusetzenden Additive (I) beziehungsweise Additivgemische dieser Art gilt noch das folgende: Die Migrationsgeschwindigkeit dieser Wertstoffe wird sehr stark durch ihre Molekülstruktur bestimmt. Geradkettige oder nur beschränkt verzweigte Kohlenwasserstoffreste beispielsweise des bevorzugten Bereichs von etwa C₁₂ bis C₃₆ und insbesondere des Bereichs von etwa C₁₂ bis C₂₄ wandern vergleichsweise schnell, so daß die Ausbildung optimaler Haftfestigkeitswerte schon in vergleichsweise kurzer Frist einstellbar ist. Hier können beispielsweise maximale Haftfestigkeitswerte schon im Zeitbereich von etwa 1 bis 3 Tagen bestimmt werden.

Werden dagegen Additive beziehungsweise Additivgemische (I) vergleichsweise komplexerer und/oder größerer Molekülstruktur - beispielsweise mit bis zu 45 oder 50 C-Atomen im individuellen Molekül - eingesetzt, dann läßt sich die sehr viel langsamere Migration solcher Haftvermittler daran feststellen, daß die einstellbaren und zu bestimmenden Haftfestigkeitswerte über einen beträchtlichen Zeitraum von beispielsweise 2 bis 3 Wochen ansteigen und erst danach im wesentlichen konstant bleiben. Hier tritt ganz offensichtlich eine vergleichsweise langsame Anreicherung der haftvermittelnden Gruppen erhöhter Polarität auf der Außenfläche der Polyolefin-Formteile statt, die dann bei der nachfolgenden Beschichtung in Interaktion mit dem Lack und/oder dem Klebstoff treten können. Ein charakteristisches Beispiel für ein solches vergleichsweise langsam migrierendes Additiv (I) sind die überwiegend auf Abietinsäure basierenden Balsamharze (indonesisches Baumharz). Zahlenmäßige Angaben hierzu finden sich im nachfolgenden Beispielsteil. Die aufgrund der Molekülstruktur der jeweils eingesetzten Additive (I) zu erwartende Wanderungsgeschwindigkeit kann auch einer der Faktoren sein, der die im jeweiligen Einzelfall einzusetzende Menge dieser Additive (I) mitbestimmt. Untergrenzen für die Menge dieser Zusätze des Additivs (I) zum Polyolefin liegen bei etwa 0,01 Gew.-% und insbesondere bei etwa 0,1 Gew.-%. In der Regel wird es zweckmäßig sein wenigstens etwa 0,2 bis 0,8 Gew.-% - Gew.-% jeweils hier bezogen auf das Gewicht des oleophilen Polyolefins - zu verwenden. Optimierte Haftfestigkeitswerte für die jeweils im Einzelfall eingesetzten Vertreter dieser Stoffklasse zum Additiv (I) werden in der Regel im Bereich von etwa 1 bis 5 Gew.-% und insbesondere im Bereich bis etwa 3 Gew.-% eingestellt. Dabei kann aber die Mitverwendung auch größerer Mengen dieser Additivkomponenten (I) - beispielsweise bis etwa 10 Gew.-% - sinnvoll sein.

Wie bereits angesprochen wird begreiflicherweise die einzustellende optimale Haftfestigkeit durch die chemische Natur und die mögliche Interaktion der Substituenten erhöhter Polarität und gegebenenfalls Reaktivität am Additiv (I) mitbestimmt. Durch die jeweils zu erwartenden Beanspruchungen im Fertigprodukt an die Bindungsfestigkeit zwischen dem Polyolefin und dem aufgetragenen Fremdmaterial wird hier die Auswahl der im Einzelfall einzusetzenden Additive (I) mitbestimmt. In der Regel lassen sich erfindungsgemäß Haftfestigkeitswerte - bestimmt als Zugscher-Festigkeit nach der im Beispielsteil angegebenen Standardmethode - von wenigstens etwa 1 N/mm² und bevorzugt von wenigstens 1,2 N/mm², einstellen. Es kann weiterhin bevorzugt sein hier Haftfestigkeitswerte von wenigstens 1,5 bis 1,8 N/mm² einzustellen, wobei für stark beanspruchte Kombinationsmaterialien Haftfestigkeitswerte von wenigstens etwa 2,0 N/mm² bevorzugt und erfindungsgemäß durch geeignete Auswahl der haßvermittelnden Additive jederzeit eingestellt werden können.

Das Zahlenmaterial des Beispielteils zeigt, daß der erfindungsgemäß vorgesehenen Immobilisierung der Additivkomponenten (I) im geschilderten Sinne für die Dauerhaftigkeit der Bindewirkung entscheidende Bedeutung zukommt. Gesättigte Carbonsäuren, beispielsweise von der Art der Stearinsäure oder der noch besser wirksamen entsprechenden geradkettigen Carbonsäuren mit etwas kürzeren Kohlenwasserstoffresten im Molekül, können zwar kurzfristig zu guten Haftfestigkeitswerten führen, bei der Lagerung derart ausgerüsteter Polyolefinfeststoffe sinkt dann aber die einstellbare Haftfestigkeit kontinuierlich ab. Ganz anders sieht es bei den im erfindungsgemäßen Sinne im Grenzflächenbereich immobilisierten Haftvermittlern (I) aus. Hier werden einmal eingestellte optimierte Haftfestigkeitswerte über lange Zeiträume erhalten oder steigen sogar noch eher bei weiterführender Lagerung an

Die Kombination der erfindungsgemäßen Ausbildung erhöhter Haftfestigkeitswerte mit an sich bekannten Technologien zur Verbesserung der Haftfestigkeit auf Polyolefinoberflächen fällt in den Rahmen der erfindungsgemäßen Lehre. So können sowohl mechanische wie chemische und/oder physikalische Oberflächenbehandlungen der Polyolefinaußenfläche mit den erfindungsgemäß ausgebildeten Modifizierungen der Haftfestigkeit verbunden werden. Erforderlich ist das allerdings in aller Regel nicht.

Die Einarbeitung der internen Haftvermittler und der gegebenenfalls mitverwendeten Sikkative beziehungsweise Initiatoren in das Polyolefin-basierte oleophile Feststoffmaterial kann nach an sich bekannten Technologien erfolgen. So wird es in der Regel zweckmäßig sein, eine Vorkonfektionierung der Additive mit begrenzten Mengen des Polyolefins zu vergleichsweise höher konzentrierten Stoffmischungen vorzunehmen, die beispielsweise in Granulatform ausgebildet sein können. Diese werden dann bei der Raumform schaffenden Verarbeitung der jeweiligen Polyolefine beziehungsweise Polyolefingemische eingearbeitet, wobei hier eine möglichst homogene Einarbeitung zweckmäßig ist. Mitverwendete Initiatoren, Sikkative und dergleichen können entsprechend in getrennter Form vorkonfektioniert und bei der abschließenden Aufmischung der Fertigprodukte zugegeben werden.

Als oleophiles Polyolefin-Basismaterial eigenen sich die zahlreichen heute bekannten Polymerund Copolymertypen auf Polyethylen- beziehungsweise Polypropylen-Basis, wie sie beispielsweise in dem eingangs zitierten druckschriftlichen Stand der Technik referiert sind. Auch Abmischungen reiner Polyolefine mit Copolymeren sind grundsätzlich geeignet, so lange die Migrationsfähigkeit der Additive (I) im Sinne der erfindungsgemäßen Erfindung erhalten bleibt und damit ihre Anreicherung im Bereich der Feststoffoberflächen sichergestellt ist. Für die erfindungsgemäße Lehre besonders geeignete Polymertypen sind in der nachfolgenden Zusammenstellung aufgezählt:

Poly(ethylene) wie HDPE (high density polyethylene), LDPE (low density polyethylene), LLDPE (linear low density polyethylene), MDPE (medium density polyethylene), UHMPE (ultra high molecular polyethylene), VPE (vernetztes Polyethylen), HPPE (high pressure polyethylene); Poly(styrol); Poly(methylstyrol); Poly(oxymethylen); Metallocen-katalysierte Cycloolefin-Copolymere wie Norbornen-Ethylen-Copolymere; Copolymere, die zu mindestens 80 % Ethylen und/oder Styrol enthalten und zu weniger als 20 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-covinylchlorid), Poly(styrol-co-acrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen.

### Beispiele

In den nachfolgenden, tabellarisch zusammengefaßten Beispielen werden
- standardisiert hergestellte Materialproben
- jeweils standardisierten Beschichtungen (Verklebung beziehungsweise Lackierung) unterworfen, und die so hergestellten Testmaterialien
- in standardisierten Testverfahren ausgewertet.

Im einzelnen gilt dabei
(A) Eingesetzte Materialien:
   - In allen Versuchen wird als hochmolekulares Polyolefin ein entsprechendes Polyethylen vom LDPE-Typ eingesetzt (Handelsprodukt "Lupolen H 1800" der Firma BASF) Die im jeweils betroffenen Beispiel mitverwendeten Hilfsstoffe - vergleichsweise niedermolekulare Mischungskomponenten im Sinne der Additive (I), und/oder Sikkative sind in der tabellarischen Zusammenfassung (vergl. unten, Tabelle 1) jedem individuellen Beispiel nach Art und Menge zugeordnet und angegeben. Im einzelnen gilt dabei das folgende:
   - Additive mit beschränktem Molekülgewicht, insbesondere Additive (I) gemäß der Erfindung, sind im jeweils betroffenen Beispiel entweder durch ihren Handelsnamen oder durch chemische Identifizierung gekennzeichnet. Bezüglich Ölsäurediethanolamid wird auf die sachlichen Erläuterungen zur chemischen Beschaffenheit in dem "Anhang zu den Beispielen" verwiesen, der der tabellarischen Zusammenfassung der Beispiel nachgeordnet ist.
   - Als katalytisch aktive Komponente zur Fixierung der migrationsfähigen Zusatzstoffe vom Typ der Additive (I) wird in den Beispielen - soweit eingesetzt - eine als "Sikkativ" bezeichnete Mischung aus einem Kobalt-, Zirkon- und Blei-Octoat in Toluol mit einem Metallgehalt von 1,04 Gew.-% Co, 2,48 Gew.-% Zr und 9,93 Gew.-% Pb eingesetzt.
   - Die zur Ausbildung der jeweiligen Verklebungen eingesetzten Reaktivklebstoffe auf Polyurethanbasis (Makroplast) beziehungsweise Epoxidbasis (Stabilit Ultra) sind in der tabellenmäßigen Zusammenfassung mit diesen Handelsbezeichnungen angegeben. Nähere Sachangaben finden sich wiederum in dem "Anhang zu den Beispielen".
(B) Die Herstellung der auszutestenden Materialproben wird dabei wie folgt vorgenommen:
   - Die Herstellung der in den Beispielen tabellarisch zusammengefaßten Stoffmischungen erfolgt durch deren Verarbeitung in einem Doppelschneckenextruder vom Typ "Brabender Plasticorder PL 2000" mit einem Schneckendurchmesser von 41,8 mm und einer Schnekkenlänge von 7D. In den Heizzonen werden dabei die folgenden Temperaturen eingestellt: Heizzone I: 220°C, Heizzone II: 230°C, Heizzone III: 240°C und Breitbanddüse: 250°C. Die Maße der Düse betragen 50 x 0,5 mm, so daß ein Band von ca. 45 mm Breite und 0,5 mm Dicke ausgebildet wird. Für alle im einzelnen vorgenommenen Untersuchungen werden diese Bänder zugrundegelegt.
   - Die Verklebung gemäß Standardbedingung wird wie folgt vorgenommen:
      Die 2-Komponenten-Klebstoffe werden in Einweg-Aluminiumschalen angerührt und direkt verarbeitet. Die aus der Extrusion erhaltenen PE-Bänder werden dabei auf einer Fläche von 25 x 25 mm = 625 mm² zwischen zwei Holzspateln verklebt, so daß zwei Klebflächen zwischen den Fügeteilen Holz und PE resultieren. Die benutzten Holzspatel sind durch die folgenden Abmessungen gekennzeichnet: Länge 10 cm, Breite 2,5 cm, Dicke 0,2 cm:
(C) Die Austestung der verklebten Materialproben wird gemäß den folgenden allgemein gültigen Angaben vorgenommen:
   - Bestimmung der Klebkraft im Zugscher-Versuch (analog DIN 53 263) gemäß den nachfolgenden Standardbedingungen:
      Zugscher-Versuch: Die Zugscher-Versuche werden mit einer Zwick-Universalprüfmaschine durchgeführt. Die Prüfgeschwindigkeit beträgt 15 mm/min. Die in den Beispielstabellen angegebenen und den jeweiligen Stoffmischungen zugeordneten
      Werte sind dabei Durchschnittswerte aus jeweils 5 Einzelmessungen. Bestimmt wird dabei die jeweils gemessene Kraft beim Bruch (in N/mm²).

In den nachfolgenden Zusammenfassungen der jeweiligen Beispiele sind neben den eingemischten Hilfsstoffen ("Mischung") und ihrer jeweils eingesetzten Menge in (g) die Anzahl der Tage angegeben, die zwischen Extrusion des Polyethylen-basierten Bandes und der Verklebung im angegebenen Standardverfahren verstrichen sind. Eine in diesem Zwischenzeitraum gegebenenfalls zusätzlich angewendete Extraktionsbehandlung des extrudierten Bandes ist im jeweiligen Einzelfall beschrieben.

Die Versuche mit den Laufenden Nr. 54,55 und 56 dienen dem Vergleich, der Versuch Nr. 63 ist erfindungsgemäß (vergl. Tabelle 1).

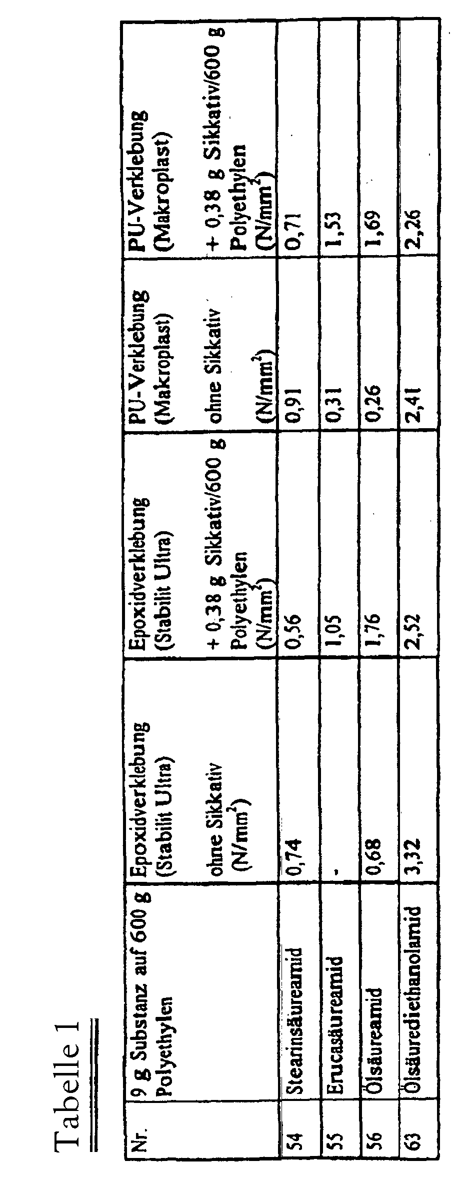

### Anhang zu den Beispielen:

### Chemikalien-Identifizierung

Wie zu Beginn des Beispielteils angegeben, werden im nachfolgenden Anhang weiterführende Angaben zur chemischen Beschaffenheit einzelner im Rahmen dieser Beispiele eingesetzten Additive (I), der Klebstoffe zusammengefaßt.

### Einzelne Chemikalien:

- Ölsäurediethanolamid:: technisches Produkt ("Comperlan OD", Handelsprodukt der Anmel derin); eingesetzt in Beispiel 63

### Die zur Verklebung eingesetzten Reaktivklebstoffe:

Makroplast, Polyurethankleber, (Handelsprodukt der Anmelderin), bestehend aus der Harzkomponente mit der Handelsbezeichnung UK 8109 und der Härterkomponente UK 5430 im Verhältnis 5 : 1; der Härter enthält Diphenylmethan-4,4'-diisocyanat; Topfzeit ca. 1 Stunde

Stabilit Ultra, Epoxidkleber, (Handelsprodukt der Anmelderin), bestehend aus Epoxidharz (Metallon E2108) und Diaminhärter im Verhältnis 10 : 6, Topfzeit ca. 30 Minuten.

## Patentansprüche

1. Verwendung von Amphiphilen (Verbindungen, die einen oder mehrere Substituenten erhöhter Polarität in den ansonsten olephilen Grundmolekülen auf Kohlenwasserstoffbasis aufweisen) zur permanenten Verbesserung der Haftfettigkeit der Oberflächen von Polyolefin-basierten Formteilen und Folien gegenüber Beschichtungen und Verklebungen, wobei man eine Mischung enthaltend
a) ein oder mehrere Polyolefine und
b) 0,01 bis 10 Gew.-% - bezogen auf die Polyolefine ― ein oder mehrerer migrationsfähiger Amphiphile (Additive I), mit einer Untergrenze der Molekulargewichte von etwa 70 bis 100 Dalton und einer Obergrenze der Molekulargewichte um 5000 Dalton,
in Gegenwart von Katalysatoren, die eine reaktive Vemetzung der Additive (I) im Bereich der Kunststoffoberfläche fördern, auf übliche Weise einer formgebenden Verarbeitung unterwirft, mit der zusätzlichen Maßgabe, dass die Additive (I) Dialkanolamide ungesättigter Fettsäuren sind.

2. Verwendung nach Anspruch 1, wobei man die Additive (I) auswählt aus der Gruppe Ölsäurediethanolamid und Linolsäurediethanolamid.

3. Verwendung nach Anspruch 1 oder 2, wobei man die Katalysatoren auswählt aus der Gruppe der Übergangsmetallsalze von Co, Zr, Fe, Pb, Mn, Ni, Cr, V und Ce.

## Claims

1. The use of amphiphiles (compounds containing one or more substituents of high polarity in the otherwise oleophilic hydrocarbon-based basic molecules) for permanently improving the adhesion of coatings and adhesives to the surfaces of polyolefin-based moldings and films, **characterized in that** a mixture containing
a) one or more polyolefins and
b) 0.01 to 10% by weight, based on the polyolefins, of one or more migratable amphiphiles (additives I) with a lower molecular weight limit of ca. 70 to 100 dalton and an upper molecular weight limit of around 5,000 dalton
is conventionally molded in the presence of catalysts which promote reactive crosslinking of the additives (I) in the plastic surface, with the additional proviso that the additives (I) are dialkanolamides of unsaturated fatty acids.

2. The use claimed in claim 1, **characterized in that** the additives (I) are selected from the group consisting of oleic acid diethanolamide and linoleic acid diethanolamide.

3. The use claimed in claim 1 or 2, **characterized in that** the catalysts are selected from the group of transition metal salts of Co, Zr, Fe, Pb, Mn, Ni, Cr, V and Ce.

## Revendications

1. Utilisation de substances amphiphiles (composés qui possèdent un ou plusieurs substituants de polarité accrue dans les molécules de base par ailleurs oléophiles, sur la base de l'hydrocarbure) en vue de l'amélioration permanente de l'adhésivité des surfaces de pièces moulées à base de polyoléfines et de feuilles contre des revêtements et des encollages, dans lequel
un mélange contenant
(a) une ou plusieurs polyoléfine(s) et
(b) de 0,01 à 10 % en poids rapporté aux polyoléfines, d'une ou plusieurs substance(s) amphiphile(s) (additif I) apte(s) à la migration, ayant une limite inférieure de poids moléculaires d'environ 70 à 100 daltons et une limite supérieure de poids moléculaires autour de 5000 daltons, est soumis en présence de catalyseurs qui favorisent une réticulation réactive des additifs (I) dans la zone des surfaces de matières plastiques, à un façonnage, moulant d'une manière usuelle, avec la précision supplémentaire que les additifs (I) sont des dialkanolamides d'acide gras non saturé.

2. Utilisation selon la revendication 1,
dans laquelle on choisit les additifs (I) dans le groupe du diéthanolamides d'acide oléique et du diéthanolamide d'acide linoléique.

3. Utilisation selon l'une quelconque des revendications 1 ou 2,
dans laquelle on choisit les catalyseurs dans le groupe des sels de métaux de transition formé de Co, Zr, Fe, Pb, Mn, Ni, Gr, V et Ce.
